# EUROPEAN PATENT APPLICATION

(11) **EP 4 593 093 A1**
(43) Date of publication of application: **30.07.2025**
(21) Application number: 22964887.8
(22) Date of filing: 11.11.2022
(51) Int. Cl.: H01M 4/04

(54) **PREPARATION METHOD FOR POSITIVE ELECTRODE SLURRY, SECONDARY BATTERY, BATTERY PACK AND ELECTRICAL APPARATUS**

(71) Applicant: Contemporary Amperex Technology (Hong Kong) Limited, Central (HK)
(72) Inventor: XING, Qi, Ningde, Fujian 352100 (CN); OUYANG, Chuying, Ningde, Fujian 352100 (CN); SUN, Chengdong, Ningde, Fujian 352100 (CN); LIU, Huihui, Ningde, Fujian 352100 (CN); DUAN, Lianwei, Ningde, Fujian 352100 (CN)
(74) Representative: Behr, Wolfgang
(86) International application number: PCT/CN2022/131535
(87) International publication number: WO 2024/098419

(57) **Abstract**

The present application provides a preparation method for a positive electrode slurry, a secondary battery, a battery pack, and an electrical apparatus. The preparation method comprises first stirring, second stirring, third stirring and fourth stirring. In the first stirring, a positive electrode active material and a conductive agent are mixed and stirred to prepare a dry mixture; in the second stirring, a binder and a solvent are mixed and stirred to prepare a glue solution; in the third stirring, the dry mixture and the glue solution are mixed and stirred to prepare a primary slurry; and in the fourth stirring, the binder, the solvent and the primary slurry are mixed and stirred to prepare a positive electrode slurry. The binder and the solvent used in the second stirring are the same as the binder and the solvent used in the fourth stirring, respectively. On the basis of the total mass of the binder used in the second stirring and the binder used in the fourth stirring, a mass ratio of the binder used in the second stirring is in a range from 50% to 70%, and a mass ratio of the binder used in the fourth stirring is in a range from 30% to 50%.

## Description

### TECHNICAL FIELD

The present application relates to the technical field of secondary batteries, in particular to a preparation method for a positive electrode slurry of a secondary battery, a secondary battery, a battery pack and an electrical apparatus.

### BACKGROUND

In recent years, with the increasingly wide use of secondary batteries, secondary batteries are widely used in energy storage power systems such as water power, thermal power, wind power and solar power stations, as well as power tools, electric bicycles, electric motorcycles, electric vehicles, military equipment, aerospace and other fields.

Electrode slurry is the basis for forming electrodes and is also the first process in secondary battery production. The properties of the electrode slurry have a significant impact on subsequent electrode production and battery performance. Positive electrode slurry is mainly a solid-liquid phase mixed system formed by positive electrode active materials, conductive agents, binders and solvents. The system is in a metastable state, and a slurry mixing process, namely, a preparation method for the slurry, has a crucial impact on the dispersion, uniformity, stability and other properties of the slurry. The slurry mixing process in the prior art is often a one-step method, where the slurry is obtained by directly mixing and stirring components in the positive electrode active slurry. However, the one-step preparation method cannot meet the manufacturing needs of binders with different weight average molecular weights, and the slurry mixing process has poor versatility, which is not conducive to reducing manufacturing costs. Therefore, it is necessary to develop a new slurry preparation method that is suitable for binders with different weight average molecular weights.

### SUMMARY OF THE INVENTION

The present application is made in view of the above-mentioned subjects, and it is intended to provide a preparation method for a positive electrode slurry of a secondary battery, so as to adapt binders with different weight average molecular weights, broaden a process window for positive electrode slurry coating, and improve processability of the positive electrode slurry.

To achieve the above objective, the present application provides a preparation method for a positive electrode slurry, including first stirring, second stirring, third stirring and fourth stirring. In the first stirring, a positive electrode active material and a conductive agent are mixed and stirred to prepare a dry mixture; in the second stirring, a binder and a solvent are mixed and stirred to prepare a glue solution; in the third stirring, the dry mixture and the glue solution are mixed and stirred to prepare a primary slurry; and in the fourth stirring, the binder, the solvent and the primary slurry are mixed and stirred to prepare a positive electrode slurry. The binder and the solvent used in the second stirring are the same as the binder and the solvent used in the fourth stirring, respectively. On the basis of the total mass of the binder used in the second stirring and the binder used in the fourth stirring, a mass ratio of the binder used in the second stirring is in a range from 50% to 70%, and a mass ratio of the binder used in the fourth stirring is in a range from 30% to 50%.

Therefore, the preparation method for the positive electrode slurry disclosed in the present application is more universal than an existing preparation method for the positive electrode slurry, and is applicable to the slurry containing binders with different weight average molecular weights. Compared with the existing preparation method, through step-by-step slurry preparation, the present application reduces discharge viscosity of the positive electrode slurry and the viscosity after standing for 24 hours, alleviates a gelation phenomenon of the positive electrode slurry, and improves the applicability of the preparation method to the binder with the large molecular weight. The preparation method has a broader universality, broadens a process window for positive electrode slurry coating, and improves processability of the positive electrode slurry.

In any of embodiments, the binder includes at least one polyvinylidene fluoride with a weight average molecular weight ranging from 800,000 to 8 million.

The preparation method disclosed in the present application is universally applicable to a low molecular weight polyvinylidene fluoride binder and a high molecular weight polyvinylidene fluoride binder, can effectively alleviate the gelation phenomenon of different slurry, help to improve production efficiency, and broaden the coating window of the slurry. The preparation method disclosed in the present application can be applicable to the binder with a weight average molecular weight of up to 8 million, so that the slurry contains the binder with the high weight average molecular weight still has low discharge viscosity and gelation resistance, and can meet the use needs of a new generation of binders.

In any of embodiments, in the third stirring, low-velocity stirring is first performed, followed by high-velocity stirring.

In the third stirring, the dry mixture and the glue solution are first stirred at a low velocity, so that the dry mixture is fully dispersed in the glue solution while avoiding excessive shearing of the dry mixture, thereby ensuring the integrity of the positive electrode active material and the conductive agent. After the low-velocity stirring, the positive electrode active material and the conductive agent are coated with the glue solution, which can avoid the subsequent high-velocity stirring from destroying a structure and size of the positive electrode active material and the conductive agent. High-velocity stirring after low-velocity stirring can reduce the viscosity of the slurry while ensuring the material performance.

In any of embodiments, in the third stirring, a revolution velocity of low-velocity stirring is in a range from 15 rpm to 25 rpm, an autorotation velocity is in a range from 400 rpm to 800 rpm, and stirring duration is in a range from 5 minutes to 15 minutes.

The revolution velocity, autorotation velocity and stirring duration of the high-velocity stirring in the third stirring are controlled within an appropriate range, so that the slurry has the low discharge viscosity, the low viscosity after standing for 24 hours and the excellent gelation resistance, which is beneficial to improving the coating performance, processability and stability of the slurry.

In any of embodiments, in the third stirring, a revolution velocity of high-velocity stirring is in a range from 20 rpm to 30 rpm, an autorotation velocity is in a range from 1,000 rpm to 1,300 rpm, and stirring duration is in a range from 50 minutes to 80 minutes.

The revolution velocity, autorotation velocity and stirring duration of the high-velocity stirring in the third stirring are controlled within an appropriate range, so that the slurry has the low discharge viscosity, the low viscosity after standing for 24 hours and the excellent gelation resistance, which is beneficial to improving the coating performance, processability and stability of the slurry.

In any of embodiments, an autorotation velocity of the first stirring is 0.

The autorotation velocity of the first stirring is controlled to be 0, which can minimize shear force of the first stirring, fully reduce the possibility of the positive electrode active material and the conductive agent being excessively broken, and ensure that the positive electrode active material and the binder have a certain particle size and specific surface area, thereby helping to improve a dispersion effect of the positive electrode active material and the binder, reduce the viscosity of the slurry after standing for 24 hours, slow down the gelation phenomenon of the slurry, and improve the stability of the slurry.

In any of embodiments, a revolution velocity of the first stirring is in a range from 20 rpm to 30 rpm.

The revolution velocity of the first stirring is controlled within an appropriate range, so that the slurry has the low discharge viscosity, the low viscosity after standing for 24 hours and the gelation resistance, which is beneficial to improving the coating performance, processability and stability of the slurry.

In any of embodiments, stirring duration of the first stirring is in a range from 5 minutes to 20 minutes.

The stirring duration of the first stirring is controlled within an appropriate range, so that the slurry has the low discharge viscosity, the low viscosity after standing for 24 hours and the gelation resistance, which is beneficial to improving the coating performance, processability and stability of the slurry.

In any of embodiments, stirring duration of the second stirring is in a range from 50 minutes to 80 minutes.

The stirring duration of the second stirring is controlled within an appropriate range, so that the slurry has the low discharge viscosity, the low viscosity after standing for 24 hours and the gelation resistance, which is beneficial to improving the coating performance, processability and stability of the slurry.

In any of embodiments, a revolution velocity of the second stirring is in a range from 25 rpm to 40 rpm.

The revolution velocity of the second stirring is controlled within an appropriate range, so that the slurry has the low discharge viscosity, and the low viscosity after standing for 24 hours, and at the same time, it is conducive to slowing down a gelation state of the slurry, improving the stability of the slurry, and broadening the process window.

In any of embodiments, an autorotation velocity of the second stirring is in a range from 1,000 rpm to 1,300 rpm.

The autorotation velocity of the second stirring is controlled within an appropriate range, so that the slurry has the low discharge viscosity, the low viscosity after standing for 24 hours and the gelation resistance, and thus the coating performance, processability and stability of the slurry are improved.

In any of embodiments, stirring duration of the fourth stirring is in a range from 60 minutes to 90 minutes.

The stirring duration of the fourth stirring is controlled within an appropriate range, so that the slurry has the low discharge viscosity, and the low viscosity after standing for 24 hours, and at the same time, it is conducive to slowing down the gelation state of the slurry, improving the stability of the slurry, and broadening the process window.

In any of embodiments, a revolution velocity of the fourth stirring is in a range from 25 rpm to 40 rpm.

The revolution velocity of the fourth stirring is controlled within an appropriate range, so that the slurry has the low discharge viscosity, and the low viscosity after standing for 24 hours, and at the same time, it is conducive to slowing down the gelation state of the slurry, improving the stability of the slurry, and broadening the process window.

In any of embodiments, an autorotation velocity of the fourth stirring is in a range from 1,000 rpm to 1,300 rpm.

The stirring duration of the fourth stirring is controlled within an appropriate range, so that the slurry has the low discharge viscosity, and the low viscosity after standing for 24 hours, and at the same time, it is conducive to slowing down the gelation state of the slurry, improving the stability of the slurry, and broadening the process window.

In any of embodiments, a solid content of the positive electrode slurry is in a range from 65% to 70%, and viscosity of the positive electrode slurry is in a range from 6,000 mPa·s to 31,000 mPa·s.

The slurry formed by the preparation method of the present application has high solid content, suitable viscosity, and excellent processability. The above slurry can be directly used in the subsequent coating process, which can improve the production efficiency.

In any of embodiments, on the basis of the total mass of the positive electrode active material, the conductive agent, the binder used in the second stirring, and the binder used in the fourth stirring, a mass percentage of the solvent used in the second stirring is in a range from 35% to 45%, and a mass percentage of the solvent used in the fourth stirring is in a range from 4% to 10%.

In any of embodiments, in the positive electrode slurry, a ratio of the mass of the positive electrode active material, the total mass of the binder, and the mass of the conductive agent is (88-96):(2-4):(2-8).

The positive electrode slurry within the above range not only has good processability, but also makes the formed positive electrode plate have excellent electrochemical performance.

In any of embodiments, the positive electrode active material is at least one of lithium iron phosphate and a modified material thereof, or a lithium nickel cobalt manganese oxide and a modified material thereof, and the modified material is prepared by one or more modification manners including doping, conductive carbon coating, conductive metal coating, and conductive polymer coating.

In any of embodiments, the solvent is selected from one or more of N-methyl-2-pyrrolidone, N,N-dimethylpropionamide, N,N-diethylpropanamide, N,N-dipropylpropionamide, N,N-dibutylpropionamide, N,N-dimethylethylpropionamide, and 3-butoxy-N-methylpropionamide.

A second aspect of the present application further provides a positive electrode slurry, and the positive electrode slurry is prepared by the preparation method for the positive electrode slurry in the first aspect.

In any of embodiments, a solid content of the positive electrode slurry is in a range from 65% to 70%, initial viscosity of the positive electrode slurry is in a range from 6,000 mPa·s to 31,000 mPa·s, and after standing for 24 hours, the viscosity of the positive electrode slurry does not exceed 49,000 mPa·s.

The positive electrode slurry provided in the present application has a high solid content, suitable viscosity, and excellent processability, and meanwhile, the slurry has excellent storage performance.

A third aspect of the present application further provides a secondary battery, including a positive electrode plate, a separator, a negative electrode plate and an electrolyte solution. The positive electrode plate is prepared from the positive electrode slurry prepared by the preparation method for the positive electrode slurry described in the first aspect or the positive electrode slurry described in the second aspect. The positive electrode plate has high quality and production efficiency.

In any of embodiments, the secondary battery is any one of a lithium-ion battery, a sodium-ion battery, a magnesium-ion battery, and a potassium-ion battery.

A fourth aspect of the present application further provides a battery module, including the secondary battery described in the third aspect of the present application.

A fifth aspect of the present application provides a battery pack, including the secondary battery described in the third aspect of the present application or the battery module in the fourth aspect of the present application.

A sixth aspect of the present application provides an electrical apparatus, including at least one selected from the secondary battery in the third aspect of the present application, the battery module in the fourth aspect of the present application, or the battery pack in the fifth aspect of the present application.

### DESCRIPTION OF DRAWINGS

Fig. 1 is a schematic diagram of a secondary battery according to an embodiment of the present application;
Fig. 2 is an exploded view of the secondary battery according to an embodiment of the present application shown in Fig. 1;
Fig. 3 is a schematic diagram of a battery module according to an embodiment of the present application;
Fig. 4 is a schematic diagram of a battery pack according to an embodiment of the present application;
Fig. 5 is an exploded view of the battery pack according to an embodiment of the present application shown in Fig. 4;
Fig. 6 is a schematic view of an electrical apparatus in which a secondary battery is used as a power source according to an embodiment of the present application.

### Description of reference numerals:

1 battery pack; 2 upper box; 3 lower box; 4 battery module; 5 secondary battery; 51 case; 52 electrode assembly; 53 cover plate.

### DESCRIPTION OF EMBODIMENTS

Embodiments of a positive electrode active material, a manufacturing method therefor, a positive electrode plate, a secondary battery, a battery module, a battery pack, and an electrical apparatus in the present application are specifically disclosed below by referring to the detailed description of drawings as appropriate. However, there may be cases where unnecessary detailed description is omitted. For example, there are cases where detailed descriptions of well-known items and repeated descriptions of actually identical structures are omitted. This is to avoid unnecessary redundancy in the following descriptions and to facilitate understanding by those skilled in the art. In addition, the drawings and subsequent descriptions are provided for those skilled in the art to fully understand the present application, and are not intended to limit the subject matter recited in the claims.

"Ranges" disclosed in the present application are defined in the form of lower limits and upper limits, a given range is defined by the selection of a lower limit and an upper limit, and the selected lower limit and upper limit define boundaries of a particular range. A range defined in this manner may be inclusive or exclusive of end values, and may be arbitrarily combined, that is, any lower limit may be combined with any upper limit to form a range. For example, if the ranges of 60-120 and 80-110 are listed for a particular parameter, it is understood that the ranges of 60-110 and 80-120 are also contemplated. Additionally, if the minimum range values 1 and 2 are listed, and if the maximum range values 3, 4 and 5 are listed, the following ranges are all contemplated: 1-3, 1-4, 1-5, 2- 3, 2-4 and 2-5. In the present application, unless stated otherwise, the numerical range "a-b" represents an abbreviated representation of any combination of real numbers between a to b, where both a and b are real numbers. For example, the numerical range "0-5" means that all the real numbers between "0-5" have been listed herein, and "0-5" is just an abbreviated representation of combinations of these numerical values. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise specified, all embodiments and optional embodiments of the present application may be combined with each other to form new technical solutions.

Unless otherwise specified, all technical features and optional technical features of the present application may be combined with each other to form new technical solutions.

Unless otherwise specified, all steps of the present application may be performed sequentially or randomly, and preferably sequentially. For example, the method comprises steps (a) and (b), meaning that the method may comprise steps (a) and (b) performed sequentially, or may comprise steps (b) and (a) performed sequentially. For example, the reference to the method may further include step (c), meaning that step (c) may be added to the method in any order. For example, the method may include steps (a), (b) and (c), or may further include steps (a), (c) and (b), or may further include steps (c), (a) and (b), and the like.

Unless otherwise specifically stated, the terms "including" and "comprising" mentioned in the present application may be open-ended, or may be closed-ended. For example, the "including" and "comprising" may indicate that it is also possible to include or comprise other components not listed, and it is also possible to include or comprise only the listed components.

Unless otherwise specifically stated, the term "or" is inclusive in the present application. For example, the phrase "A or B" means "A, B, or both A and B." More specifically, the condition "A or B" is satisfied under any one of the following conditions: A is true (or present) and B is false (or absent); A is false (or absent) and B is true (or present); or both A and B are true (or present).

Positive electrode slurry is mainly a solid-liquid phase mixed system formed by positive electrode active materials, conductive agents, binders and solvents. In order to improve the uniformity of distribution of different components in the system, slurry mixing is often performed through stirring, ball milling, ultrasonic and other processes. However, the slurry mixing process in the prior art is usually only applicable to a slurry system with fixed components and has poor versatility, and when physical properties of the components in the slurry change, the slurry mixing process often needs to be adjusted. For example, the slurry mixing process in the prior art cannot be applied to a binder with a high molecular weight, nor can it be applied to a binder with large weight average molecular weight dispersion and poor batch stability. The performance of slurry made from different batches of binders using the same slurry mixing process in the prior art varies greatly, and the slurry is prone to gelation, making it difficult to meet the production requirements of electrode plates.

### [Preparation method for positive electrode slurry]

Based on this, the present application provides a preparation method for a positive electrode slurry, including first stirring, second stirring, third stirring and fourth stirring. In the first stirring, a positive electrode active material and a conductive agent are mixed and stirred to prepare a dry mixture; in the second stirring, a binder and a solvent are mixed and stirred to prepare a glue solution; in the third stirring, the dry mixture and the glue solution are mixed and stirred to prepare a primary slurry; and in the fourth stirring, the binder, the solvent and the primary slurry are mixed and stirred to prepare a positive electrode slurry. The binder and the solvent used in the second stirring are the same as the binder and the solvent used in the fourth stirring, respectively. On the basis of the total mass of the binder used in the second stirring and the binder used in the fourth stirring, a mass ratio of the binder used in the second stirring is in a range from 50% to 70%, and a mass ratio of the binder used in the fourth stirring is in a range from 30% to 50%.

In some embodiments, the positive electrode active material is a lithium-containing transition metal oxide. In some embodiments, the positive electrode active material is at least one of lithium iron phosphate and a modified material thereof, or a lithium nickel cobalt manganese oxide and a modified material thereof, and the modified material is prepared by one or more modification manners including doping, conductive carbon coating, conductive metal coating, and conductive polymer coating.

In some embodiments, the conductive agent may include at least one of superconducting carbon, carbon black, carbon nanotubes, graphene, and carbon nanofibers.

In some embodiments, the solvent is an aqueous solvent, such as deionized water.

In some embodiments, the solvent is an oily medium, and is selected from one or more of N-methyl-2-pyrrolidone, N,N-dimethylpropionamide, N,N-diethylpropanamide, N,N-dipropylpropionamide, N,N-dibutylpropionamide, N,N-dimethylethylpropionamide, and 3-butoxy-N-methylpropionamide.

In this preparation method, the positive electrode active material and the conductive agent are first subjected to first stirring to obtain the dry mixture, and the first stirring causes the two to be mechanically riveted to form a tight entanglement; then the binder is mixed with the solvent for the second stirring to prepare the glue solution, this step can achieve effective dispersion of the binder in the solvent, and avoid aggregation and flocculation caused by direct mixing and stirring of the binder with other materials; then the dry mixture formed by the positive electrode active material and the conductive agent is mixed with the glue solution for the third stirring to prepare the primary slurry, the third stirring can effectively disperse the positive electrode active material and the conductive agent in the glue solution, and the binder in the glue solution can improve the stability of the slurry through electrostatic interaction and steric hindrance, and reduce the agglomeration and sedimentation of the positive electrode active material and the conductive agent; and finally, the binder and the solvent are mixed with the primary slurry for the fourth stirring to obtain the positive electrode slurry, in the fourth stirring, the positive electrode active material and the conductive agent are coated with the binder added additionally, which can play a role in stability maintaining and dispersion of the materials in the slurry and slow down the gelation of the slurry, and in the fourth stirring, the solvent added additionally can effectively adjust the discharge viscosity of the slurry to prevent the discharge viscosity from being too high and affecting subsequent coating.

On the basis of the total mass of the binder used in the second stirring and the binder used in the fourth stirring, a mass ratio of the binder used in the second stirring is in a range from 50% to 70%, and a mass ratio of the binder used in the fourth stirring is in a range from 30% to 50%. If too much or too little binder is added during the second stirring or the fourth stirring, the discharge viscosity and the viscosity after standing for 24 hours of the slurry cannot be effectively reduced, and the purpose of slowing down the gelation of the slurry cannot be achieved.

The preparation method for the positive electrode slurry in the prior art has poor compatibility and cannot adapt to the difference in weight average molecular weights of the binder in the slurry. Therefore, very high precision requirements are put forwarded for the material. The present application reduces the discharge viscosity and the viscosity after standing for 24 hours of the positive electrode slurry by step-by-step slurry mixing, alleviates the gelation phenomenon of the positive electrode slurry, and enables the slurry having a binder with a high weight average molecular weight to still have a low discharge viscosity and the viscosity and anti-coagulation after standing for 24 hours, thereby improving the universality of the preparation method. The preparation method of the present application is not only applicable to a binder with a low weight average molecular weight, but also applicable to a binder with a high weight average molecular weight, can effectively alleviate the gelation phenomenon of different slurries, and helps to improve production efficiency, and broaden a process window of slurry coating.

Herein, the term "process window" refers to a process range that can ensure product quality, including but not limited to a temperature range, a pressure range, a storage time length, etc. It can be understood that the broader the process window, the lower the demand for process precision.

In some embodiments, the binder includes at least one polyvinylidene fluoride with a weight average molecular weight ranging from 800,000 to 8 million. In some embodiments, the weight average molecular weight is optionally any one of 800,000, 1 million, 1.5 million, 2 million, 2.5 million, 3 million, 3.5 million, 4 million, 4.5 million, 5 million, 5.5 million, 6 million, 6.5 million, 7 million, 7.5 million, and 8 million.

Herein, the term "weight average molecular weight" refers to the molecular weight of a polymer averaged per unit weight according to the statistical average molecular weight by mass.

The slurry mixing process in the prior art is difficult to be applied to the binder with the high weight average molecular weight. The positive electrode slurry having the binder with the high molecular weight prepared by the prior art tends to have a high discharge viscosity, is difficult to meet coating demands, and is prone to having a severe gelation phenomenon. The preparation method disclosed in the present application can be applied to a binder with the weight average molecular weight of up to 8 million by adding the binder step by step and coordinating the stirring velocity, so that the slurry still has the low discharge viscosity and the viscosity after standing for 24 hours and good gelation resistance, which can meet the use requirements of the binder with a high molecular weight.

In some embodiments, in the third stirring, low-velocity stirring is first performed, followed by high-velocity stirring. It can be understood that low-velocity stirring and high-velocity stirring are relative. If the velocity of the low-velocity stirring in the third stirring is v1, and the velocity of the high-velocity stirring is v2, then v1 is lower than v2, and v1 and v2 represent the autorotation velocity of the stirring.

In the third stirring, the dry mixture and the glue solution are first stirred at a low velocity, so that the dry mixture is fully dispersed in the glue solution while avoiding excessive shearing of the dry mixture, thereby ensuring the structural integrity of the positive electrode active material and the conductive agent. After the low-velocity stirring, surfaces of the positive electrode active material and the conductive agent are coated with the glue solution, which can avoid the subsequent high-velocity stirring from excessively shearing the positive electrode active material and the conductive agent. High-velocity stirring after low-velocity stirring can reduce the viscosity of the slurry, which provides the possibility for the subsequent preparation of the positive electrode slurry with the low discharge viscosity.

In some embodiments, in the third stirring, a revolution velocity of low-velocity stirring is in a range from 15 rpm to 25 rpm, an autorotation velocity is in a range from 400 rpm to 800 rpm, and stirring duration is in a range from 5 minutes to 15 minutes.

Herein, the term "autorotation velocity" refers to a velocity at which a stirrer rotates about its own axis.

Herein, the term "revolution velocity" refers to a velocity at which the stirrer rotates around a kettle loaded with the material.

In some embodiments, in the third stirring, the revolution velocity of low-velocity stirring is optionally any one of 15 rpm, 20 rpm and 25 rpm.

In some embodiments, in the third stirring, the autorotation velocity of low-velocity stirring is optionally any one of 400 rpm, 500 rpm, 600 rpm, 700 rpm and 800 rpm.

In some embodiments, in the third stirring, the stirring duration of the low-velocity stirring is optionally any one of 5 minutes, 10 minutes and 15 minutes.

In some embodiments, a stirring apparatus is a planetary stirrer. The working principle of the planetary stirrer is that after the stirrer is started, the planet carrier rotates, driving the stirring shaft in the box to rotate. It rotates at a high speed while revolving around the axis of the barrel, so that the material is subjected to strong shearing and kneading. It can be understood that the preparation method provided in the present application is suitable for any type of planetary stirrer.

If the revolution velocity of the low-velocity stirring in the third stirring is too low or the autorotation velocity is too low or the stirring duration is too short, the dry mixture formed by the conductive agent and the active material cannot be effectively dispersed in the glue solution, the discharge viscosity and the viscosity after standing for 24 hours of the slurry are too large, the slurry is prone to gelation, and the slurry has poor stability. If the revolution velocity of the low-velocity stirring in the third stirring is too high or the autorotation velocity is too high or the stirring duration is too long, the discharge viscosity of the slurry, the viscosity after standing for 24 hours of the slurry, and the gelation phenomenon of the slurry cannot be further significantly improved, and waste of energy and increased preparation costs will be caused.

To sum up, the revolution velocity, autorotation velocity and stirring duration of the low-velocity stirring in the third stirring are controlled within an appropriate range, so that the slurry has the low discharge viscosity, the low viscosity after standing for 24 hours and the excellent gelation resistance, which is beneficial to improving the coating performance, processability and stability of the slurry.

In some embodiments, in the third stirring, a revolution velocity of high-velocity stirring is in a range from 20 rpm to 30 rpm, an autorotation velocity is in a range from 1,000 rpm to 1,300 rpm, and stirring duration is in a range from 50 minutes to 80 minutes.

In some embodiments, in the third stirring, the revolution velocity of high-velocity stirring is optionally any one of 20 rpm, 25 rpm and 30 rpm.

In some embodiments, in the third stirring, the autorotation velocity of high-velocity stirring is optionally any one of 1,000 rpm, 1,100 rpm, 1,200 rpm and 1,300 rpm.

In some embodiments, in the third stirring, the stirring duration of high-velocity stirring is optionally any one of 50 minutes, 60 minutes, 70 minutes and 80 minutes.

If the revolution velocity of high-velocity stirring in the third mixing is too low or the autorotation velocity is too low or the stirring duration is too short, the primary slurry cannot be strongly sheared, the discharge viscosity and the viscosity after 24 hours of standing of the slurry are too large, the slurry is prone to gelation, and the slurry has the poor stability. If the revolution velocity of high-velocity stirring in the third stirring is too high or the autorotation velocity is too high or the stirring duration is too long, the discharge viscosity of the slurry, the viscosity after standing for 24 hours of the slurry, and the gelation phenomenon of the slurry cannot be further significantly improved, and the waste of energy and the reduction of the production efficiency will be caused.

To sum up, the revolution velocity, autorotation velocity and stirring duration of the high-velocity stirring in the third stirring are controlled within an appropriate range, so that the slurry has the low discharge viscosity, the low viscosity after standing for 24 hours and the excellent gelation resistance, which is beneficial to improving the coating performance, processability and stability of the slurry.

In some embodiments, an autorotation velocity of the first stirring is 0.

The autorotation velocity of the first stirring is controlled to be 0, which can minimize shear force of the first stirring, fully reduce the possibility of the active material and the conductive agent being excessively broken, and ensure that the positive electrode active material and the binder have a certain particle size and specific surface area, thereby helping to improve a dispersion effect of the positive electrode active material and the binder, reduce the viscosity of the slurry after standing for 24 hours, slow down the gelation phenomenon of the slurry, and improve the stability of the slurry.

In some embodiments, a revolution velocity of the first stirring is in a range from 20 rpm to 30 rpm.

In some embodiments, the revolution velocity of the first stirring is optionally any one of 20 rpm, 25 rpm and 30 rpm.

If the revolution velocity of the first stirring is too low, the positive electrode active material and the conductive agent cannot be effectively mixed, the discharge viscosity and the viscosity after standing for 24 hours of the slurry are too high, the slurry is prone to gelation, and the slurry has the poor stability. If the revolution velocity of the first stirring is too high, the discharge viscosity of the slurry, the viscosity after standing for 24 hours of the slurry, and the gelation phenomenon of the slurry cannot be further significantly improved, which leads to the waste of energy and the increase of the production costs.

The revolution velocity of the first stirring is controlled within an appropriate range, so that the slurry has the low discharge viscosity, the low viscosity after standing for 24 hours and the gelation resistance, which is beneficial to improving the coating performance, processability and stability of the slurry.

In some embodiments, stirring duration of the first stirring is in a range from 5 minutes to 20 minutes. In some embodiments, the stirring duration of the first stirring is optionally any one of 5 minutes, 10 minutes, 15 minutes and 20 minutes.

If the stirring duration of the first stirring is too short, the positive electrode active material and the conductive agent cannot be effectively mixed, the discharge viscosity and the viscosity after standing for 24 hours of the slurry are too high, the slurry is prone to gelation, and the slurry has the poor stability. If the stirring duration of the first stirring is too long, the discharge viscosity of the slurry, the viscosity after standing for 24 hours of the slurry, and the gelation phenomenon of the slurry cannot be further significantly improved, which leads to the waste of energy and the reduction of the production efficiency.

The stirring duration of the first stirring is controlled within an appropriate range, so that the slurry has the low discharge viscosity, the low viscosity after standing for 24 hours and the gelation resistance, which is beneficial to improving the coating performance, processability and stability of the slurry.

In some embodiments, stirring duration of the second stirring is in a range from 50 minutes to 80 minutes. In some embodiments, the stirring duration of the second stirring is optionally any one of 50 minutes, 60 minutes, 70 minutes and 80 minutes.

If the stirring duration of the second stirring is too short, the binder and the solvent cannot be effectively mixed, the discharge viscosity and the viscosity after standing for 24 hours of the slurry are too high, the slurry is prone to gelation, and the slurry has the poor stability. If the stirring duration of the second stirring is too long, the discharge viscosity of the slurry, the viscosity after standing for 24 hours of the slurry, and the gelation phenomenon of the slurry cannot be further significantly improved, which leads to the waste of energy and the reduction of the production efficiency.

The stirring duration of the second stirring is controlled within an appropriate range, so that the slurry has the low discharge viscosity, the low viscosity after standing for 24 hours and the gelation resistance, which is beneficial to improving the coating performance, processability and stability of the slurry.

In some embodiments, a revolution velocity of the second stirring is in a range from 25 rpm to 40 rpm. In some embodiments, the revolution velocity of the second stirring is optionally any one of 25 rpm, 30 rpm, 35 rpm and 40 rpm.

If the revolution velocity of the second stirring is too short, the binder and the solvent cannot be effectively mixed, the discharge viscosity and the viscosity after standing for 24 hours of the slurry are too high, the slurry is prone to gelation, and the slurry has the poor stability. If the revolution velocity of the second stirring is too long, the slurry is prone to gelation.

The revolution velocity of the second stirring is controlled within an appropriate range, so that the slurry has the low discharge viscosity, and the low viscosity after standing for 24 hours, and at the same time, it is conducive to slowing down a gelation state of the slurry, improving the stability of the slurry, and broadening the process window for slurry coating.

In some embodiments, the autorotation velocity of the second stirring is in a range from 1,000 rpm to 1,300 rpm. In some embodiments, the autorotation velocity of the second stirring is optionally any one of 1,000 rpm, 1,100 rpm, 1,200 rpm and 1,300 rpm.

If the revolution velocity of the second stirring is too low, the binder and the solvent cannot be effectively mixed, the discharge viscosity and the viscosity after standing for 24 hours of the slurry are too high, the slurry is prone to gelation, and the slurry has the poor stability. If the revolution velocity of the second stirring is too high, the discharge viscosity of the slurry, the viscosity after standing for 24 hours of the slurry, and the gelation phenomenon of the slurry cannot be further significantly improved, which leads to the waste of energy and the increase of the production costs.

The autorotation velocity of the second stirring is controlled within an appropriate range, so that the slurry has the low discharge viscosity, the low viscosity after standing for 24 hours and the gelation resistance, which is beneficial to improving the coating performance, processability and stability of the slurry.

In some embodiments, stirring duration of the fourth stirring is in a range from 60 minutes to 90 minutes. In some embodiments, the stirring duration of the fourth stirring is optionally any one of 60 minutes, 70 minutes, 80 minutes and 90 minutes.

If the stirring duration of the fourth stirring is too short, the binder and the solvent cannot be effectively mixed with the primary slurry, the discharge viscosity and the viscosity after standing for 24 hours of the slurry are too large, the slurry is prone to gelation, and the slurry has the poor stability. If the stirring duration of the fourth stirring is too long, the positive electrode active material and the conductive agent are prone to being broken, and the slurry is prone to gelation.

The stirring duration of the fourth stirring is controlled within an appropriate range, so that the slurry has the low discharge viscosity, and the low viscosity after standing for 24 hours, and at the same time, it is conducive to slowing down the gelation state of the slurry, improving the stability of the slurry, and broadening the process window.

In some embodiments, a revolution velocity of the fourth stirring is in a range from 25 rpm to 40 rpm. In some embodiments, the revolution velocity of the fourth stirring is optionally any one of 25 rpm, 30 rpm, 35 rpm and 40 rpm.

If the revolution velocity of the fourth stirring is too low, the binder and the solvent cannot be effectively mixed with the primary slurry, the discharge viscosity and the viscosity after standing for 24 hours of the slurry are too large, the slurry is prone to gelation, and the slurry has the poor stability. If the revolution velocity of the fourth stirring is too high, the positive electrode active material and the conductive agent are prone to being broken, and the slurry is prone to gelation.

The revolution velocity of the fourth stirring is controlled within an appropriate range, so that the slurry has the low discharge viscosity, and the low viscosity after standing for 24 hours, and at the same time, it is conducive to slowing down the gelation state of the slurry, improving the stability of the slurry, and broadening the process window.

In some embodiments, an autorotation velocity of the fourth stirring is in a range from 1,000 rpm to 1,300 rpm. In some embodiments, the autorotation velocity of the fourth stirring is optionally any one of 1,000 rpm, 1,100 rpm, 1,200 rpm and 1,300 rpm.

If the autorotation velocity of the fourth stirring is too low, the binder and the solvent cannot be effectively mixed with the primary slurry, the discharge viscosity and the viscosity after standing for 24 hours of the slurry are too large, the slurry is prone to gelation, and the slurry has the poor stability. If the autorotation velocity of the fourth stirring is too high, the positive electrode active material and the conductive agent are prone to being broken, and the slurry is prone to gelation.

The stirring duration of the fourth stirring is controlled within an appropriate range, so that the slurry has the low discharge viscosity, and the low viscosity after standing for 24 hours, and at the same time, it is conducive to slowing down the gelation state of the slurry, improving the stability of the slurry, and broadening the process window.

In some embodiments, a solid content of the positive electrode slurry is in a range from 65% to 70%, and viscosity of the positive electrode slurry is in a range from 6,000 mPa·s to 31,000 mPa·s.

The solid content and viscosity of the positive electrode slurry can be tested by any method known in the art. For example, the viscosity can be measured using a rotary viscometer, and the solid content can be tested by measuring a weight of the slurry before and after removing water.

In some embodiments, the solid content of the positive electrode slurry is optionally any one of 65%, 66%, 67%, 68%, 69% and 70%.

In some embodiments, the viscosity of the positive electrode slurry is optionally any one of 6,000 mPa·s, 7,000 mPa·s, 8,000 mPa·s, 9,000 mPa·s, 10,000 mPa·s, 11,000 mPa·s, 12,000 mPa·s, 13,000 mPa·s, 14,000 mPa·s, 15,000 mPa·s, 16,000 mPa·s, 17,000 mPa·s, 18,000 mPa·s, 19,000 mPa·s, 20,000 mPa·s, 21,000 mPa·s, 22,000 mPa·s, 23,000 mPa·s, 24,000 mPa·s, 25,000 mPa·s, 26,000 mPa·s, 27,000 mPa·s, 28,000 mPa·s, 29,000 mPa·s, 30,000 mPa·s, and 31,000 mPa·s.

The slurry formed by the preparation method of the present application has high solid content, suitable viscosity, and excellent processability. The above slurry can be directly used in the subsequent coating process, which can improve the production efficiency.

In some embodiments, on the basis of the total mass of the positive electrode active material, the conductive agent, the binder used in the second stirring, and the binder used in the fourth stirring, a mass percentage of the solvent used in the second stirring is in a range from 35% to 45%, and a mass percentage of the solvent used in the fourth stirring is in a range from 4% to 10%.

In some embodiments, in the positive electrode slurry, a ratio of the mass of the positive electrode active material, the total mass of the binder, and the mass of the conductive agent is (88-96):(2-4):(2-8).

It can be understood that the total mass of the binder refers to a sum of the mass of the binder used in the second stirring and the mass of the binder used in the fourth stirring. The mass of the added binder, positive electrode active material and conductive agent can be determined by those skilled in the art according to a rated range of stirring equipment.

The positive electrode slurry within the above range not only has good processability, but also makes the formed positive electrode plate have excellent electrochemical performance.

### [Positive electrode slurry]

In an embodiment of the present application, a positive electrode slurry is provided, a solid content of the positive electrode slurry is in a range from 65% to 70%, initial viscosity of the positive electrode slurry is in a range from 6,000 mPa·s to 31,000 mPa·s, and after standing for 24 hours, viscosity of the positive electrode slurry does not exceed 49,000 mPa·s.

The initial viscosity refers to discharge viscosity of the positive electrode slurry when it is just prepared.

In some embodiments, the positive electrode slurry is prepared by the preparation method for the positive electrode slurry in any of the above embodiments.

In some embodiments, the viscosity of the positive electrode slurry after standing for 24 hours does not exceed 48,000 mPa·s, 45,000 mPa·s, 41,000 mPa·s, 35,000 mPa·s, 31,000 mPa·s or 26,000 mPa·s.

The slurry formed by the preparation method of the present application has a high solid content, suitable viscosity, and excellent processability, and meanwhile, the slurry has excellent storage performance.

In addition, a secondary battery, a battery module, a battery pack, and an electrical apparatus in the present application are described below with reference to the drawings as appropriate.

In an embodiment of the present application, a secondary battery is provided.

In general, the secondary battery includes a positive electrode plate, a negative electrode plate, an electrolyte, and a separator. The positive electrode plate is prepared from the positive electrode slurry prepared by the preparation method in any of embodiments.

In some embodiments, the secondary battery is any one of a lithium-ion battery, a sodium-ion battery, a magnesium-ion battery, and a potassium-ion battery.

During charging and discharging of the battery, active ions are intercalated and deintercalated back and forth between the positive electrode plate and the negative electrode plate. The electrolyte serves to conduct ions between the positive electrode plate and the negative electrode plate. The separator is arranged between the positive electrode plate and the negative electrode plate and mainly functions to prevent the positive and negative electrodes from short-circuiting while enabling ions to pass through.

### [Positive electrode plate]

The positive electrode plate includes a positive electrode current collector and a positive electrode film layer arranged on at least one surface of the positive electrode current collector, and the positive electrode film layer is prepared from the positive electrode slurry prepared by the preparation method for the positive electrode slurry in any of embodiments of the present application or the positive electrode slurry in any of embodiments.

As an example, the positive electrode current collector has two surfaces opposite in its own thickness direction, and the positive electrode film layer is arranged on either one or both of the two opposite surfaces of the positive electrode current collector.

In some embodiments, the positive electrode current collector can be a metal foil or a composite current collector. For example, an aluminum foil can be used as the metal foil. The composite current collector may comprise a polymer material substrate layer and a metal layer formed on at least one surface of the polymer material substrate layer. The composite current collector may be formed by forming a metal material (such as aluminum, aluminum alloy, nickel, nickel alloy, titanium, titanium alloy, silver, and silver alloy) on a high molecular material substrate (such as a substrate of polypropylene (PP), polyethylene terephthalate (PET), polybutylene terephthalate (PBT), polystyrene (PS), or polyethylene (PE)).

In some embodiments, the positive electrode active material may be a positive electrode active material for batteries well known in the art. As an example, the positive electrode active material may include at least one of the following materials: a lithium-comprising phosphate of olivine structure, a lithium transition metal oxide, and a respective modified compound thereof. However, the present application is not limited to these materials, and other conventional materials useful as positive electrode active materials for batteries can also be used. These positive electrode active materials may be used alone or in combination of two or more thereof. Among them, examples of lithium transition metal oxides may include, but are not limited to, at least one of a lithium-cobalt oxide (such as LiCoO₂), a lithium-nickel oxide (such as LiNiO₂), a lithium-manganese oxide (such as LiMnO₂ or LiMn₂O₄), a lithium-nickel-cobalt oxide, a lithium-manganese-cobalt oxide, a lithium-nickel-manganese oxide, a lithium-nickel-cobalt-manganese oxide (such as LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁)), a lithium-nickel-cobalt-aluminum oxide (such as LiNi_{0.85}Co_{0.15}Al_{0.05}O₂), and a modified compound thereof. Examples of lithium-containing phosphates of olivine structure may include, but are not limited to, at least one of lithium iron phosphate (e.g., LiFePO₄ (also abbreviated as LFP)), lithium iron phosphate and carbon composites, lithium manganese phosphate (e.g., LiMnPO₄), lithium manganese phosphate and carbon composites, lithium iron manganese phosphate, and lithium iron manganese phosphate and carbon composites.

In some embodiments, the positive electrode film layer further optionally comprises a binder. As an example, the binder may comprise at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluoroacrylate resin.

In some embodiments, the positive electrode film layer further optionally comprises a conductive agent. As an example, the conductive agent may include at least one of superconducting carbon, acetylene black, carbon black, ketjen black, carbon dots, carbon nanotubes, graphene, and carbon nanofibers.

In some embodiments, the positive electrode plate may be prepared by the following manner: the positive electrode slurry is prepared from the above components for preparing the positive electrode plate, such as the positive electrode active material, the conductive agent, the binder, and the solvent (such as N-methyl-2-pyrrolidone) by using the preparation method for the positive electrode slurry in any of embodiments of the present application, the positive electrode current collector is coated with the prepared positive electrode slurry, and drying, cold pressing and other processes are performed to obtain the positive electrode plate.

### [Negative electrode plate]

The negative electrode plate comprises a negative electrode current collector and a negative electrode film layer arranged on at least one surface of the negative electrode current collector, and the negative electrode film layer comprises a negative electrode active material.

As an example, the negative electrode current collector has two surfaces opposite in its own thickness direction, and the negative electrode film layer is arranged on either one or both of the two opposite surfaces of the negative electrode current collector.

In some embodiments, the negative electrode current collector may be a metal foil or a composite current collector. For example, a copper foil can be used as the metal foil. The composite current collector may include a high molecular material substrate layer and a metal layer formed on at least one surface of the high molecular material substrate. The composite current collector can be formed by forming a metal material (copper, copper alloy, nickel, nickel alloy, titanium, titanium alloy, silver, and silver alloy, etc.) on a polymer material substrate (e.g., polypropylene (PP), polyethylene terephthalate (PET), polybutylene terephthalate (PBT), polystyrene (PS), polyethylene (PE), etc.).

In some embodiments, a negative electrode active material for the battery well known in the art may be used as the negative electrode active material. As an example, the negative active material may include at least one of the following materials: artificial graphite, natural graphite, soft carbon, hard carbon, silicon-based material, tin-based material, and lithium titanate, etc. The silicon-based material may be selected from at least one of elemental silicon, silicon-oxygen complex, silicon-carbon complex, silicon-nitrogen complex, and silicon alloy. The tin-based material may be selected from at least one of elemental tin, a tin-oxygen compound, and a tin alloy. However, the present application is not limited to these materials, and other conventional materials useful as negative electrode active materials for batteries can also be used. These negative electrode active materials may be used alone or in a combination of two or more thereof.

In some embodiments, the negative electrode film layer further optionally comprises a binder. The binder may be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally comprises a conductive agent. The conductive agent may be selected from at least one of superconducting carbon, acetylene black, carbon black, Ketjen black, carbon dot, carbon nanotube, graphene, and carbon nanofiber.

In some embodiments, the negative electrode film layer further optionally comprises other adjuvants, for example, a thickener (such as sodium carboxymethyl cellulose (CMC-Na)).

In some embodiments, the negative electrode plate can be prepared by dispersing the components for preparing the negative electrode plate, for example, the negative electrode active material, the conductive agent, the binder and any other components in a solvent (for example, deionized water) to form a negative electrode slurry; and coating the negative electrode slurry on a negative electrode current collector, followed by oven drying, cold pressing and other procedures, to obtain the negative electrode plate.

### [Electrolyte]

The electrolyte serves to conduct ions between the positive electrode plate and the negative electrode plate. The type of the electrolyte is not particularly limited in the present application, and can be selected according to requirements. For example, the electrolyte may be in a liquid, gel, or full solid state.

In some embodiments, an electrolyte solution is used as the electrolyte. The electrolyte solution comprises an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro bis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the electrolyte solution further optionally comprises an additive. For example, the additive may include a negative electrode film-forming additive or a positive electrode film-forming additive, or may further include an additive that can improve some performance of the battery, such as an additive that improves overcharge performance of the battery or an additive that improves high-temperature or low-temperature performance of the battery.

### [Separator]

In some embodiments, the secondary battery further comprises a separator. The type of the separator is not particularly limited in the present application, and any well-known separator having good chemical stability, mechanical stability, and a porous structure may be selected.

In some embodiments, the material of the separator can be selected from at least one of glass fiber, nonwoven cloth, polyethylene, polypropylene, and polyvinylidene fluoride. The separator may be a single-layer film or a multi-layer composite film, and is not particularly limited. When the separator is a multilayer composite film, the material in each layer may be same or different, which is not particularly limited.

In some embodiments, the positive electrode plate, the negative electrode plate, and the separator may be made into an electrode assembly by a winding process or a stacking process.

In some embodiments, the secondary battery may comprise an outer package. The outer package can be used to encapsulate the above electrode assembly and the above electrolyte.

In some embodiments, the outer package of the secondary battery may be a hard case, such as a hard plastic case, an aluminum case, a steel case, and the like. The outer package of the secondary battery may also be a soft pack, such as a bag-type soft pack. The material of the soft bag may be a plastic, and examples of the plastic may include polypropylene, polybutylene terephthalate, polybutylene succinate, and the like.

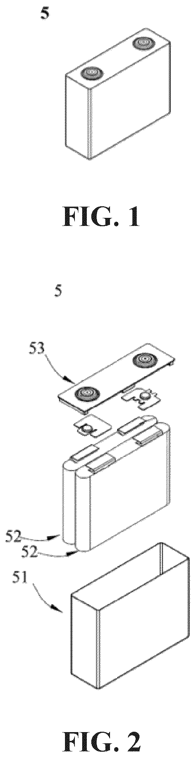

The shape of the secondary battery is not particularly limited in the present application, and may be a cylinder, a square, or any other shape. For example, Fig. 1 shows a secondary battery 5 with a square structure as an example.

In some embodiments, referring to Fig. 2, the outer package may comprise a case 51 and a cover plate 53. The case 51 may comprise a bottom plate and a side plate connected to the bottom plate, which enclose to form an accommodating cavity. The case 51 has an opening that communicates with the accommodating cavity, and the cover plate 53 may cover the opening to close the accommodating cavity. The positive electrode plate, the negative electrode plate, and the separator may be formed into an electrode assembly 52 by a winding process or a stacking process. The electrode assembly 52 is encapsulated within the accommodating cavity. The electrolyte solution impregnates the electrode assembly 52. The number of electrode assemblies 52 comprised in the secondary battery 5 may be one or more, and may be selected by those skilled in the art according to specific actual requirements.

In some embodiments, the secondary batteries may be assembled into a battery module, the number of secondary batteries comprised in the battery module may be one or more, and the specific number may be selected by those skilled in the art according to the application and capacity of the battery module.

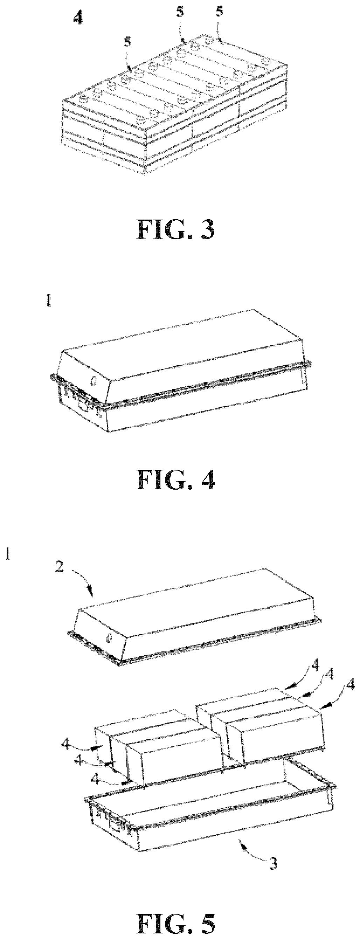

Fig. 3 shows a battery module 4 as an example. Referring to Fig. 3, in the battery module 4, a plurality of secondary batteries 5 can be sequentially arranged along the length direction of the battery module 4. Of course, any other arrangements are also possible. The plurality of secondary batteries 5 may further be fixed by fasteners.

Optionally, the battery module 4 may further include a shell having an accommodating space, in which the plurality of secondary batteries 5 is accommodated.

In some embodiments, the above battery modules may be further assembled into a battery pack, the number of battery modules comprised in the battery pack may be one or more, and the specific number may be selected by those skilled in the art based on the application and capacity of the battery pack.

Figs. 4 and 5 show a battery pack 1 as an example. Referring to Figs. 4 and 5, the battery pack 1 may comprise a battery box and a plurality of battery modules 4 provided in the battery box. The battery box comprises an upper box 2 and a lower box 3, where the upper box 2 can cover the lower box 3 and forms an enclosed space for accommodating the battery module 4. The plurality of battery modules 4 may be arranged in the battery box in any manner.

In addition, the present application further provides an electrical apparatus, comprising at least one of the secondary battery, the battery module, or the battery pack provided in the present application. The secondary battery, the battery module, or the battery pack can be used as a power source for the electrical apparatus, and can also be used as an energy storage unit for the electrical apparatus. The electrical apparatus may include, but is not limited to, a mobile device (such as a mobile phone, and a laptop, etc.), an electric vehicle (such as an all-electric vehicle, a hybrid electric vehicle, a plug-in hybrid electric vehicle, an electric bicycle, an electric scooter, an electric golf cart, and an electric truck, etc.), an electric train, a ship, a satellite, an energy storage system, etc.

For the electrical apparatus, the secondary battery, the battery module, or the battery pack may be selected according to its use requirements.

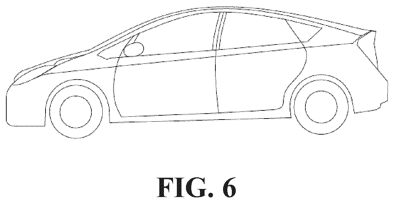

Fig. 6 is an example of an electrical apparatus. The electrical apparatus is an all-electric vehicle, a hybrid electric vehicle, a plug-in hybrid electric vehicle, or the like. In order to meet the requirements of the electrical apparatus for high power and high energy density of a secondary battery, a battery pack or a battery module may be used.

As another example, the apparatus may be a mobile phone, a tablet, a laptop, etc. The apparatus is generally required to be light and thin, and may use a secondary battery as a power source.

### EXAMPLES

Embodiments of the present application will be described below. The embodiments described below are exemplary and only used to explain the present application, and are not to be construed as limiting the present application. Where specific techniques or conditions are not specified in the examples, the techniques or conditions described in the literature of the art or the product specifications are followed. Where manufacturers are not specified, the reagents or instruments used are conventional products and are commercially available.

### I. Preparation method

### Example 1

### 1) Preparation of positive electrode slurry

First stirring: 25 kg of conductive carbon black and 1,200 kg of lithium iron phosphate are mixed and stirred in a double planetary stirrer, and stirring is performed for 15 minutes at a revolution velocity of 25 rpm and an autorotation velocity of 0, so as to obtain a dry mixture;
second stirring: 17 kg of polyvinylidene fluoride binder with a weight average molecular weight being 1.8 million and 500 kg of N-methyl-2-pyrrolidone are mixed and stirred, and stirring is performed for 60 minutes at a revolution velocity of 25 rpm and an autorotation velocity of 1,200 rpm, so as to obtain a glue solution;
third stirring: the dry mixture is added to the glue solution for mixing and stirring, stirring is performed for 10 minutes at a revolution velocity of 20 rpm and an autorotation velocity of 600 rpm, and then stirring is performed for 70 minutes at a revolution velocity of 25 rpm and an autorotation velocity of 1,200 rpm, so as to obtain a primary slurry; and
fourth stirring: 8 kg of polyvinylidene fluoride binder with a weight average molecular weight being 1.8 million, 60 kg of N-methyl-2-pyrrolidone and the primary slurry are mixed and stirred, and stirring is performed for 70 minutes at a revolution velocity of 30 rpm and an autorotation velocity of 1,200 rpm to obtain a positive electrode slurry with viscosity of 18,000 mPa·s and a solid content of 68%.

### Examples 2-3

The preparation method is basically the same as that in Example 1, except that the mass ratio of the binder in the second stirring is adjusted. See Table 1 for specific parameters.

### Examples 4-9

The preparation method is basically the same as that in Example 1, except that the weight average molecular weight of the polyvinylidene fluoride binder is adjusted. See Table 1 for specific parameters.

### Examples 10-67

The preparation method is basically the same as that in Example 1, except that the stirring parameters are adjusted. See Table 1 for specific parameters.

### Comparative Example 1

1) 8 kg of conductive carbon black and 1,200 kg of lithium iron phosphate are mixed and stirred in a double planetary stirrer, and stirring is performed for 15 minutes at a revolution velocity of 25 rpm and an autorotation velocity of 0, so as to obtain a dry mixture;
2) 18 kg of polyvinylidene fluoride binder with a weight average molecular weight being 1.8 million and 560 kg of N-methyl-2-pyrrolidone are mixed and stirred, and stirring is performed for 60 minutes at a revolution velocity of 25 rpm and an autorotation velocity of 1,200 rpm, so as to obtain a glue solution; and
3) the dry mixture is added to the glue solution, low-velocity stirring is first performed for 200 minutes at a revolution velocity of 25 rpm and an autorotation velocity of 1,200 rpm, and then high-velocity stirring is performed for 60 minutes at a revolution velocity of 30 rpm and an autorotation velocity of 1,300 rpm, so as to obtain a positive electrode slurry.

### Comparative Examples 2-5

The preparation method is basically the same as that in Comparative Example 1, except that the weight average molecular weight of the polyvinylidene fluoride binder is adjusted. See Table 1 for specific parameters.

### Comparative Example 6

1) 18 kg of polyvinylidene fluoride binder with a weight average molecular weight being 1.8 million and 560 kg of N-methyl-2-pyrrolidone are mixed and stirred, and stirring is performed for 60 minutes at a revolution velocity of 25 rpm and an autorotation velocity of 1200 rpm, so as to obtain a glue solution;
2) 1,200 kg of lithium iron phosphate is added into the glue solution for mixing and stirring, and stirring is performed for 60 minutes at a revolution velocity of 25 rpm and an autorotation velocity of 1,200 rpm, so as to obtain a primary slurry; and
3) 8 kg of conductive carbon black is added into the primary slurry for mixing and stirring, and stirring is performed for 140 minutes at a revolution velocity of 30 rpm and an autorotation velocity of 1,200 rpm, so as to obtain a positive electrode slurry.

### Comparative Examples 7-10

The preparation method is basically the same as that in Comparative Example 6, except that the weight average molecular weight of the polyvinylidene fluoride binder is adjusted. See Table 1 for specific parameters.

### Comparative Examples 11-12

The preparation method is basically the same as that in Example 1, except that the mass ratio of the binder in the second stirring is adjusted. See Table 1 for specific parameters.

### II. Slurry property test

### 1. Slurry discharge viscosity test

The prepared positive electrode slurry is placed for 10 minutes before discharge. A viscosity value first measured by using a Dveslvtjo rotary viscosity tester (BROOKFIELD) is recorded as the discharge viscosity, wherein test conditions are: 25°C and an autorotational velocity of 12 rpm, a 64-rotor is used to measure a viscosity not less than 2,000 mPa·s, and a 62-rotor is used to measure a viscosity less than 2,000 mPa·s. Measurement is performed for three times in parallel and an average value is taken.

### 2. Viscosity change test of slurry after standing for 24 hours

The slurry after standing for 24 hours is subjected to viscosity measurement again. A viscosity value measured by using a Dveslvtjo rotary viscosity tester (BROOKFIELD) is recorded as the 24-hour viscosity, wherein test conditions are: 25°C and an autorotational velocity of 12 rpm, a 64-rotor is used to measure a viscosity not less than 200 mPa·s, and a 62-rotor is used to measure a viscosity less than 2,000 mPa·s. Measurement is performed for three times in parallel and an average value is taken.

### 3. Gelation state test of slurry after standing for 24 hours

After the slurry is subjected to still standing for 24 hours, a straight steel ruler is used to pick up the slurry in a beaker, and a gelation state of the slurry is judged according to a flow state of the slurry.

In the gelation-free state, the slurry flows naturally and continuously, and the slurry flows evenly on the surface of the steel ruler without lumps;
In the slight gelation state, the slurry flows naturally and continuously, but the fluid is relatively fine, and the slurry is basically spread evenly on the surface of the steel ruler, with small lumps;
In the moderate gelation state, the slurry drips naturally and intermittently; it flows discontinuously, and the slurry cannot be spread evenly on the surface of the steel ruler, and there are obvious lumpy agglomerations;
in the severe gelation state, the slurry cannot flow down in a stream, forms into lumps and falls off, or remains directly on the steel ruler and cannot flow down.

### 4. Slurry solid content test

A small piece of aluminum foil is taken and weighed in a moisture analyzer, which is recorded as M0, the moisture analyzer is reset to zero, and the moisture analyzer is MOC-120H;
an upper-layer slurry is taken, an electrode plate is coated with a small amount of upper-layer slurry, and then the electrode plate is placed into the moisture analyzer for weighing, which is recorded as M1; and
the equipment is closed and drying is started; after completion, weighing data is recorded as M2, and the solid content is calculated, and is (M2-M0)/(M1-M0).

### III. Analysis on test results of each example and comparative example

The positive electrode slurries of the examples and comparative examples are respectively prepared according to the above method, and various parameters are measured. The results are shown in Table 1 below.

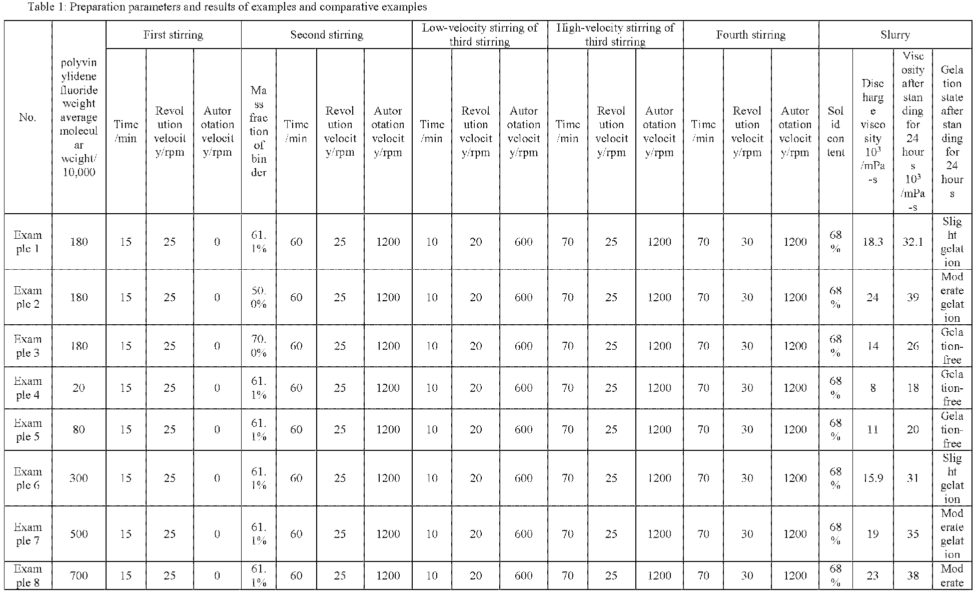

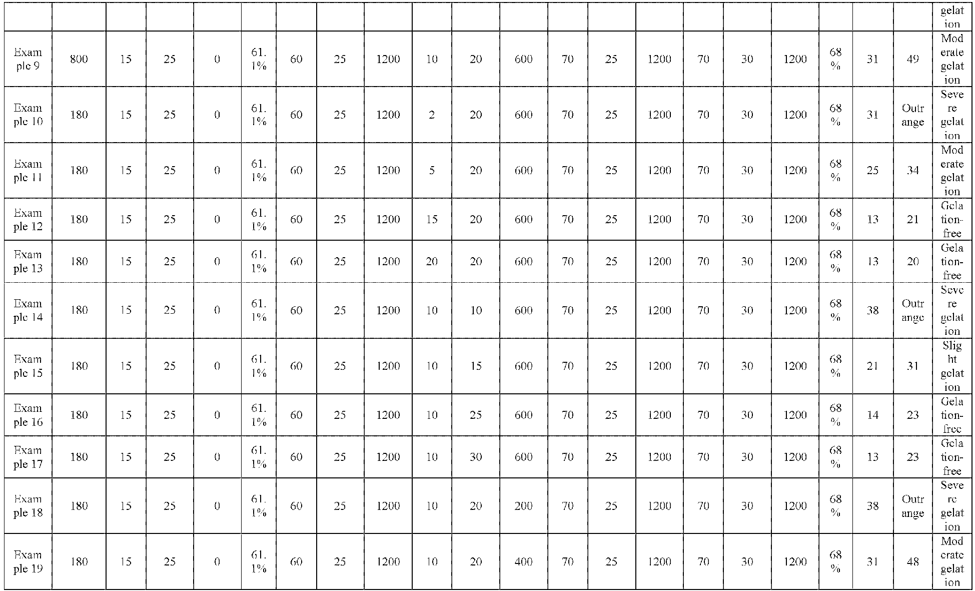

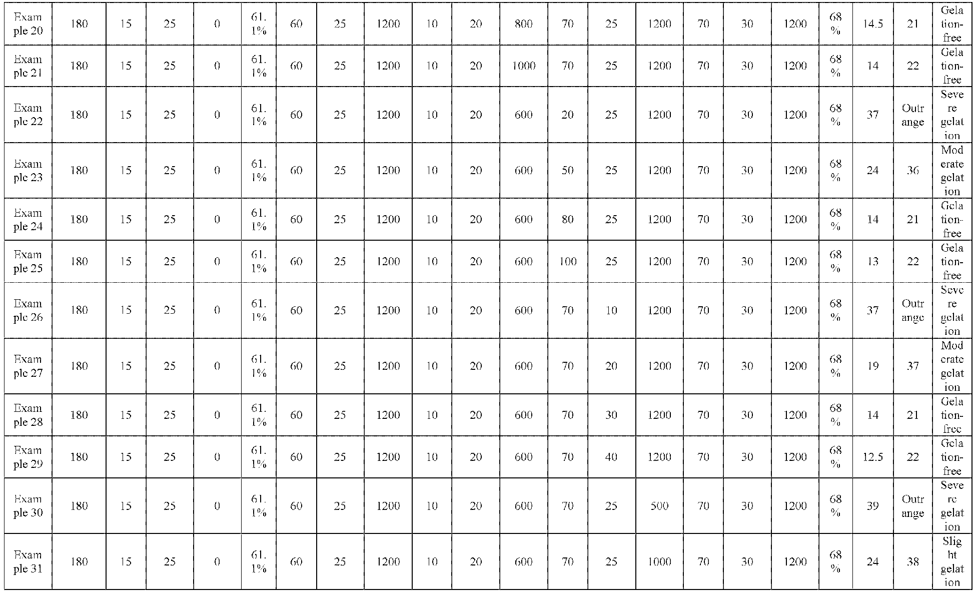

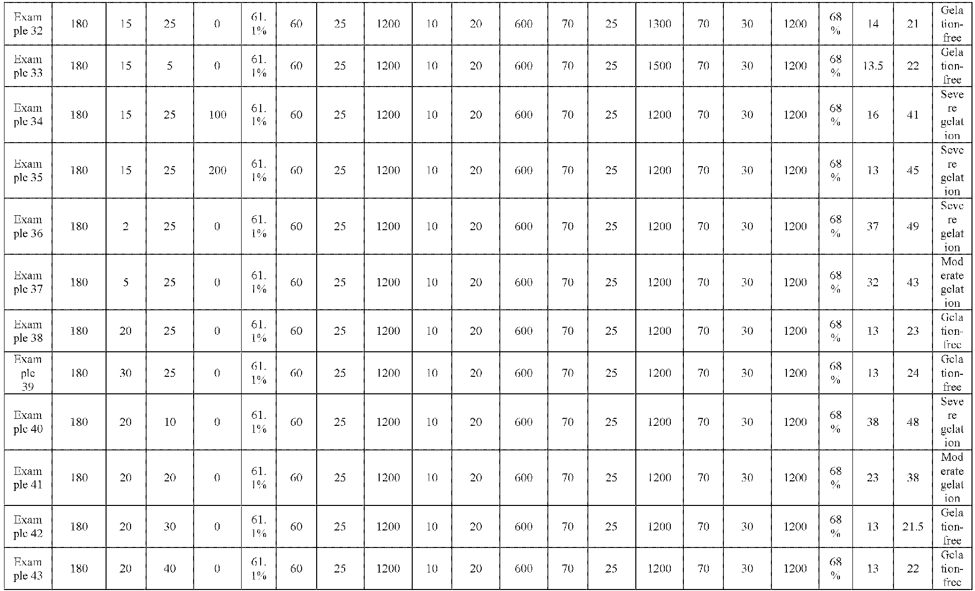

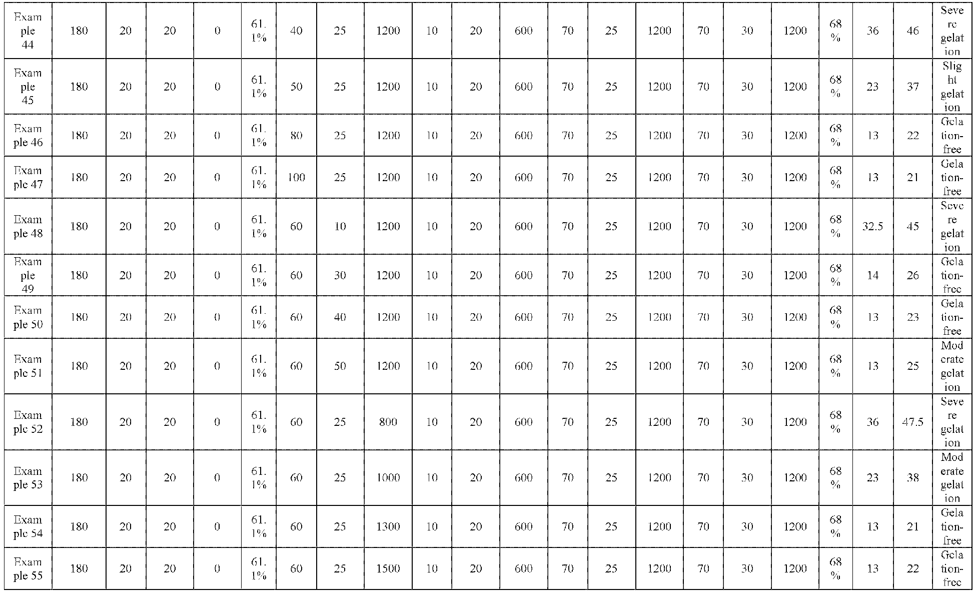

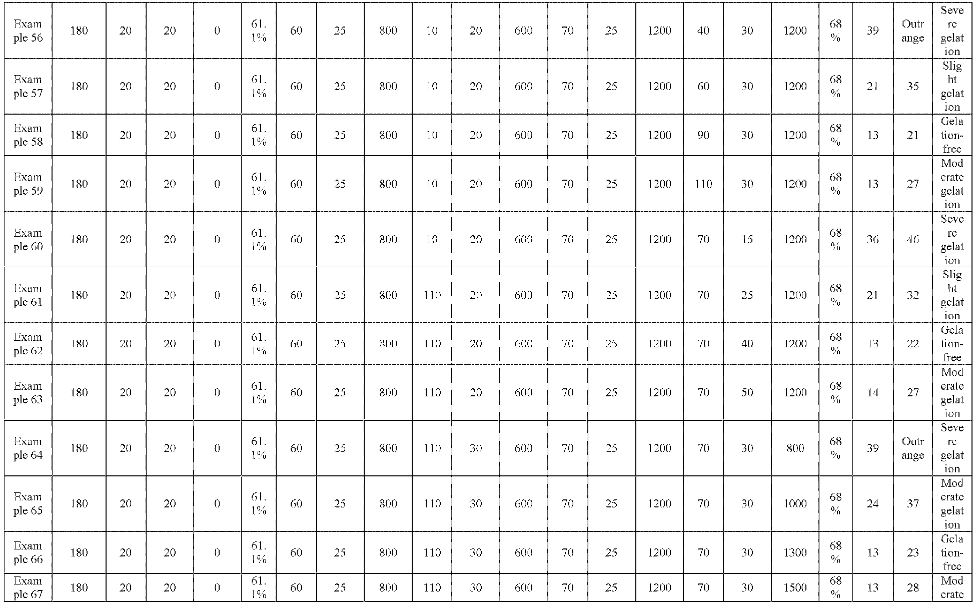

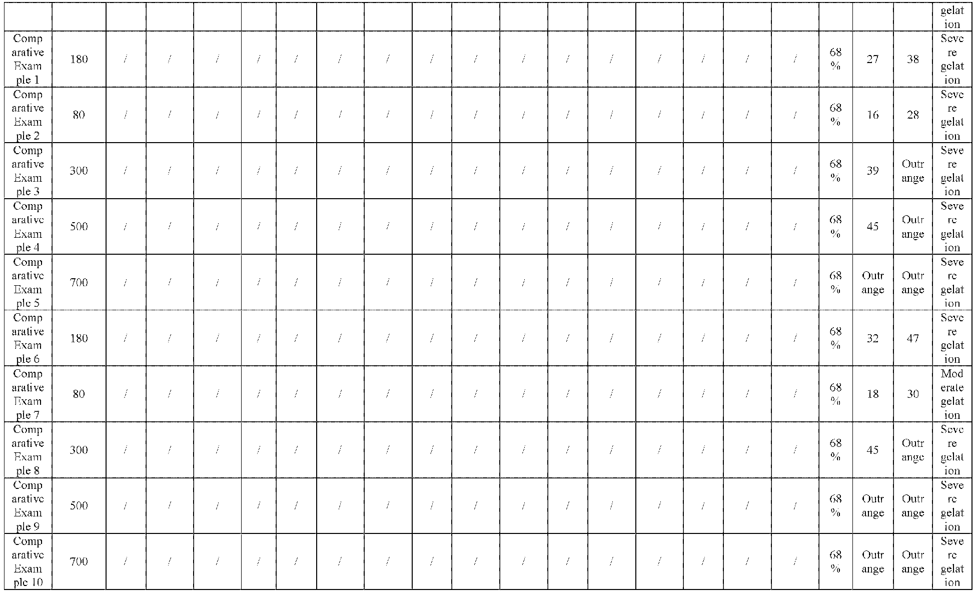

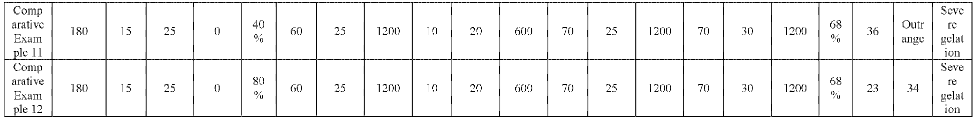

According to the results in Table 1, it can be seen that the positive electrode slurry in Examples 1-67 is prepared using the preparation method for the slurry disclosed in the present application, including first stirring, second stirring, third stirring and fourth stirring. In the first stirring, a positive electrode active material and a conductive agent are mixed and stirred to prepare a dry mixture; in the second stirring, a binder and a solvent are mixed and stirred to prepare a glue solution; in the third stirring, the dry mixture and the glue solution are mixed and stirred to prepare a primary slurry; and in the fourth stirring, the binder, the solvent and the primary slurry are mixed and stirred to prepare a positive electrode slurry. The binder and the solvent used in the second stirring are the same as the binder and the solvent used in the fourth stirring, respectively. On the basis of the total mass of the binder used in the second stirring and the binder used in the fourth stirring, a mass ratio of the binder used in the second stirring is in a range from 50% to 70%, and a mass ratio of the binder used in the fourth stirring is in a range from 30% to 50%.

From the comparison between Examples 1-9 and Comparative Examples 1-10, it can be seen that the preparation method for the slurry in the present disclosure has versatility, can be applicable to the slurry including the polyvinylidene fluoride binder with a weight average molecular weight of 200,000 to 8 million, and is universally applicable to a binder with a low molecular weight and a binder with a high molecular weight.

It can be seen from the comparative examples that a preparation process in the prior art is unable to improve a gelation state of a binder with a weight average molecular weight of 1.8 million. The preparation method disclosed in the present application causes the slurry including the binder with the weight average molecular weight up to 8 million to still have low discharge viscosity and good gelation resistance, and can meet the use needs of a new generation of binders with the high molecular weight.

From the comparison between Examples 1-3 and Comparative Examples 11-12, it can be seen that controlling a proportion of the binder added in the first stirring to be 50% to 70% of the total mass of the binder can reduce the discharge viscosity of the slurry, effectively alleviate gelation of the slurry, and broaden a process window of slurry coating.

From the comparison between Example 1, Examples 5-9 and Example 4, the weight average molecular weight of the polyvinylidene fluoride binder is controlled to be 800,000 to 8 million, the requirements of bonding performance of an electrode plate can further be met without significantly changing the discharge viscosity of the slurry, the viscosity of the slurry after standing for 24 hours, and the gelation phenomenon of the slurry.

From the comparisons between Examples 27-29 and Example 26, and Examples 31-33 with Example 30, it can be seen that in the third stirring, low-velocity stirring is first performed and then high-velocity stirring is performed, which can effectively reduce the discharge viscosity of the slurry and the viscosity after standing for 24 hours of the slurry, slow down the gelation of the slurry, and improve the coatability and processability of the slurry.

From the comparison of Example 1, Examples 11-12 and Example 10, it can be seen that controlling the stirring duration of the low-velocity stirring in the third stirring to be 5 minutes to 15 minutes can reduce the discharge viscosity and the viscosity after standing for 24 hours of the slurry, slow down the gelation of the slurry, and broaden the process window of slurry coating. From the comparison between Example 1, Examples 11-12 and Example 13, it can be seen that controlling the stirring duration of the low-velocity stirring in the third stirring to be 5 minutes to 15 minutes can take into account both the quality and efficiency of slurry mixing, reduce the discharge viscosity, and slow down the gelation of the slurry.

From the comparison of Example 1, Examples 15-16 and Example 14, it can be seen that controlling the revolution velocity of the low-velocity stirring in the third stirring to be 15 rpm to 25 rpm can reduce the discharge viscosity and the viscosity after standing for 24 hours of the slurry, slow down the gelation of the slurry, and broaden the process window of slurry coating. From the comparison between Example 1, Examples 15-16 and Example 17, it can be seen that controlling the revolution velocity of the low-velocity stirring in the third stirring to be 15 rpm to 25 rpm can take into account both the quality and cost of slurry mixing, reduce the discharge viscosity, and slow down the gelation of the slurry.

From the comparison of Example 1, Examples 19-20 and Example 18, it can be seen that controlling the autorotation velocity of the low-velocity stirring in the third stirring to be 400 rpm to 800 rpm can reduce the discharge viscosity and the viscosity after standing for 24 hours of the slurry, slow down the gelation of the slurry, improve storage performance of the slurry, and broaden the process window of slurry coating. From the comparison between Example 1, Examples 19-20 and Example 21, it can be seen that controlling the autorotation velocity of the low-velocity stirring in the third stirring to be 400 rpm to 800 rpm can take into account both the quality and cost of slurry mixing, reduce the discharge viscosity, and slow down the gelation of the slurry.

From the comparison of Example 1, Examples 23-24 and Example 22, it can be seen that controlling the stirring duration of the high-velocity stirring in the third stirring to be 50 minutes to 80 minutes can reduce the discharge viscosity and the viscosity after standing for 24 hours of the slurry, slow down the gelation of the slurry, improve the storage performance of the slurry, and broaden the process window of slurry coating. From the comparison between Example 1, Examples 23-24 and Example 25, it can be seen that controlling the stirring duration of the high-velocity stirring in the third stirring to be 50 minutes to 80 minutes can take into account both the quality and efficiency of slurry mixing, reduce the discharge viscosity, and slow down the gelation of the slurry.

From the comparison of Example 1, Examples 27-28 and Example 26, it can be seen that controlling the revolution velocity of the high-velocity stirring in the third stirring to be 20 rpm to 30 rpm can reduce the discharge viscosity and the viscosity after standing for 24 hours of the slurry, slow down the gelation of the slurry, improve storage performance of the slurry, and broaden the process window of slurry coating. From the comparison between Example 1, Examples 15-16 and Example 17, it can be seen that controlling the revolution velocity of the high-velocity stirring in the third stirring to be 15 rpm to 25 rpm can take into account both the quality and cost of slurry mixing, reduce the discharge viscosity, and slow down the gelation of the slurry.

From the comparison of Example 1, Examples 31-32 and Example 30, it can be seen that controlling the autorotation velocity of the high-velocity stirring in the third stirring to be 1,000 rpm to 1,300 rpm can reduce the discharge viscosity and the viscosity after standing for 24 hours of the slurry, slow down the gelation of the slurry, improve storage performance of the slurry, and broaden the process window of slurry coating. From the comparison between Example 1, Examples 31-32 and Example 33, it can be seen that controlling the autorotation velocity of the high-velocity stirring in the third stirring to be 1,000 rpm to 1,300 rpm can take into account both the quality and cost of slurry mixing, reduce the discharge viscosity, and slow down the gelation of the slurry.

From the comparison between Example 1 and Examples 34-35, it can be seen that controlling the autorotation velocity of the first stirring to be 0 can reduce the viscosity of the slurry after standing for 24 hours, slow down the gelation phenomenon of the slurry, improve the stability of the slurry, and broaden the process window.

From the comparison of Example 1, Examples 37-38 and Example 36, it can be seen that controlling the stirring duration of the first stirring to be 5 minutes to 20 minutes can reduce the discharge viscosity and the viscosity after standing for 24 hours of the slurry, slow down the gelation phenomenon of the slurry, improve the stability of the slurry, and broaden the process window. From the comparison between Example 1, Examples 37-38 and Example 39, it can be seen that controlling the stirring duration of the first stirring to be 5 minutes to 20 minutes can take into account both the quality and efficiency of slurry mixing, reduce the discharge viscosity, and slow down the gelation of the slurry.

From the comparison between Example 1, Examples 41-42 and Example 40, it can be seen that controlling the revolution velocity of the first stirring to be 20 rpm to 30 rpm can reduce the discharge viscosity and the viscosity after standing for 24 hours of the slurry, slow down the gelation phenomenon of the slurry, improve the stability of the slurry, and broaden the process window. From the comparison between Example 1, Examples 41-42 and Example 43, it can be seen that controlling the revolution velocity of the first stirring to be 20 rpm to 30 rpm can take into account both the quality and cost of slurry mixing, reduce the discharge viscosity, and slow down the gelation of the slurry.

From the comparison of Example 1, Examples 45-46 and Example 44, it can be seen that controlling the stirring duration of the second stirring to be 50 minutes to 80 minutes can reduce the discharge viscosity and the viscosity after standing for 24 hours of the slurry, slow down the gelation phenomenon of the slurry, improve the stability of the slurry, and broaden the process window. From the comparison between Example 1, Examples 45-46 and Example 47, it can be seen that controlling the stirring duration of the second stirring to be 50 minutes to 80 minutes can take into account both the quality and efficiency of slurry mixing, reduce the discharge viscosity, and slow down the gelation of the slurry.

From the comparison between Example 1, Examples 49-50 and Example 48, it can be seen that controlling the revolution velocity of the second stirring to be 25 rpm to 40 rpm can reduce the discharge viscosity and the viscosity after standing for 24 hours of the slurry, slow down the gelation phenomenon of the slurry, improve the stability of the slurry, and broaden the process window. From the comparison between Example 1, Examples 49-50 and Example 51, it can be seen that controlling the revolution velocity of the second stirring to be 25 rpm to 40 rpm can slow down the gelation of the slurry, improve the stability of the slurry, and broaden the process window.

From the comparison between Example 1, Examples 53-54 and Example 52, it can be seen that controlling the autorotation velocity of the second stirring to be 1,000 rpm to 1,300 rpm can reduce the discharge viscosity and the viscosity after standing for 24 hours of the slurry, slow down the gelation phenomenon of the slurry, improve the stability of the slurry, and broaden the process window. From the comparison between Example 1, Examples 53-54 and Example 55, it can be seen that controlling the autorotation velocity of the first stirring to be 1,000 rpm to 1,300 rpm can take into account both the quality and cost of slurry mixing, reduce the discharge viscosity, and slow down the gelation of the slurry.

From the comparison of Example 1, Examples 57-58 and Example 56, it can be seen that controlling the stirring duration of the fourth stirring to be 60 minutes to 90 minutes can reduce the discharge viscosity and the viscosity after standing for 24 hours of the slurry, slow down the gelation phenomenon of the slurry, improve the stability of the slurry, and broaden the process window. From the comparison between Example 1, Examples 57-58 and Example 59, it can be seen that controlling the stirring duration of the fourth stirring to be 60 minutes to 90 minutes can slow down the gelation of the slurry, improve the stability of the slurry, and broaden the process window.

From the comparison between Example 1, Examples 61-62 and Example 60, it can be seen that controlling the revolution velocity of the fourth stirring to be 25 rpm to 40 rpm can reduce the discharge viscosity and the viscosity after standing for 24 hours of the slurry, slow down the gelation phenomenon of the slurry, improve the stability of the slurry, and broaden the process window. From the comparison between Example 1, Examples 61-62 and Example 63, it can be seen that controlling the revolution velocity of the fourth stirring to be 25 rpm to 40 rpm can slow down the gelation of the slurry, improve the stability of the slurry, and broaden the process window.

From the comparison between Example 1, Examples 65-66 and Example 64, it can be seen that controlling the autorotation velocity of the fourth stirring to be 1,000 rpm to 1,300 rpm can reduce the discharge viscosity and the viscosity after standing for 24 hours of the slurry, slow down the gelation phenomenon of the slurry, improve the stability of the slurry, and broaden the process window. From the comparison between Example 1, Examples 65-66 and Example 67, it can be seen that controlling the autorotation velocity of the second stirring to be 1,000 rpm to 1,300 rpm can slow down the gelation of the slurry, improve the stability of the slurry, and broaden the process window.

It can be seen from the examples that the viscosity of the positive electrode slurry with the solid content of 65%-70% disclosed in the present application is in a range frm 6,000 mPa·s to 31,000 mPa·s, and the positive electrode slurry has the good coatability and processability.

It can be seen from the examples that on the basis of the total mass of the positive electrode active material, the conductive agent, the binder used in the second stirring, and the binder used in the fourth stirring, a mass percentage of the solvent used in the second stirring is controlled to be in a range from 35% to 45%, and a mass percentage of the solvent used in the fourth stirring is controlled to be in a range from 4% to 10%.

It can be seen from the examples that the solid content of the positive electrode slurry disclosed in the present application is in a range from 65% to 70%, initial viscosity of the positive electrode slurry is in a range from 6,000 mPa·s to 31,000 mPa.s, and after standing for 24 hours, the viscosity of the positive electrode slurry does not exceed 49,000 mPa·s.

It should be noted that the present application is not limited to the above embodiments. The above-described embodiments are merely illustrative, and embodiments having substantively the same composition as the technical idea and exerting the same effects within the scope of the technical solutions of the present application are all included in the technical scope of the present application. In addition, without departing from the scope of the subject matter of the present application, various modifications that can be conceived by those skilled in the art are applied to the embodiments, and other modes constructed by combining some of the constituent elements of the embodiments are also included in the scope of the present application.

## Claims

1. A preparation method for a positive electrode slurry, comprising first stirring, second stirring, third stirring and fourth stirring; wherein
in the first stirring, a positive electrode active material and a conductive agent are mixed and stirred to prepare a dry mixture;
in the second stirring, a binder and a solvent are mixed and stirred to prepare a glue solution;
in the third stirring, the dry mixture and the glue solution are mixed and stirred to prepare a primary slurry;
in the fourth stirring, the binder, the solvent and the primary slurry are mixed and stirred to prepare the positive electrode slurry; and
the binder and the solvent used in the second stirring are the same as the binder and the solvent used in the fourth stirring, respectively; on the basis of the total mass of the binder used in the second stirring and the binder used in the fourth stirring, a mass ratio of the binder used in the second stirring is in a range from 50% to 70%, and a mass ratio of the binder used in the fourth stirring is in a range from 30% to 50%.

2. The preparation method for the positive electrode slurry according to claim 1, wherein the binder comprises at least one polyvinylidene fluoride with a weight average molecular weight ranging from 800,000 to 8 million.

3. The preparation method for the positive electrode slurry according to claim 1 or 2, wherein in the third stirring, low-velocity stirring is first performed, followed by high-velocity stirring.

4. The preparation method for the positive electrode slurry according to claim 3, wherein in the third stirring, a revolution velocity of low-velocity stirring is in a range from 15 rpm to 25 rpm, an autorotation velocity is in a range from 400 rpm to 800 rpm, and stirring duration is in a range from 5 minutes to 15 minutes.

5. The preparation method for the positive electrode slurry according to claim 3 or 4, wherein in the third stirring, a revolution velocity of high-velocity stirring is in a range from 20 rpm to 30 rpm, an autorotation velocity is in a range from 1,000 rpm to 1,300 rpm, and stirring duration is in a range from 50 minutes to 80 minutes.

6. The preparation method for the positive electrode slurry according to any one of claims 1 to 5, wherein an autorotation velocity of the first stirring is 0.

7. The preparation method for the positive electrode slurry according to any one of claims 1 to 6, wherein a revolution velocity of the first stirring is in a range from 20 rpm to 30 rpm.

8. The preparation method for the positive electrode slurry according to any one of claims 1 to 7, wherein stirring duration of the first stirring is in a range from 5 minutes to 20 minutes.

9. The preparation method for the positive electrode slurry according to any one of claims 1 to 8, wherein stirring duration of the second stirring is in a range from 50 minutes to 80 minutes.

10. The preparation method for the positive electrode slurry according to any one of claims 1 to 9, wherein a revolution velocity of the second stirring is in a range from 25 rpm to 40 rpm.

11. The preparation method for the positive electrode slurry according to any one of claims 1 to 10, wherein an autorotation velocity of the second stirring is in a range from 1,000 rpm to 1,300 rpm.

12. The preparation method for the positive electrode slurry according to any one of claims 1 to 11, wherein stirring duration of the fourth stirring is in a range from 60 minutes to 90 minutes.

13. The preparation method for the positive electrode slurry according to any one of claims 1 to 12, wherein a revolution velocity of the fourth stirring is in a range from 25 rpm to 40 rpm.

14. The preparation method for the positive electrode slurry according to any one of claims 1 to 13, wherein an autorotation velocity of the fourth stirring is in a range from 1,000 rpm to 1,300 rpm.

15. The preparation method for the positive electrode slurry according to any one of claims 1 to 14, wherein a solid content of the positive electrode slurry is in a range from 65% to 70%, and viscosity of the positive electrode slurry is in a range from 6,000 mPa·s to 31,000 mPa·s.

16. The preparation method for the positive electrode slurry according to any one of claims 1 to 15, wherein on the basis of the total mass of the positive electrode active material, the conductive agent, the binder used in the second stirring, and the binder used in the fourth stirring, a mass percentage of the solvent used in the second stirring is in a range from 35% to 45%, and a mass percentage of the solvent used in the fourth stirring is in a range from 4% to 10%.

17. The preparation method for the positive electrode slurry according to any one of claims 1 to 16, wherein in the positive electrode slurry, a ratio of the mass of the positive electrode active material, the total mass of the binder, and the mass of the conductive agent is (88-96):(2-4):(2-8).

18. The preparation method for the positive electrode slurry according to any one of claims 1 to 17, wherein the positive electrode active material is at least one of lithium iron phosphate and a modified material thereof, or a lithium nickel cobalt manganese oxide and a modified material thereof, and the modified material is prepared by one or more modification manners comprising doping, conductive carbon coating, conductive metal coating, and conductive polymer coating.

19. The preparation method for the positive electrode slurry according to any one of claims 1 to 18, wherein the solvent is selected from one or more of N-methyl-2-pyrrolidone, N,N-dimethylpropionamide, N,N-diethylpropanamide, N,N-dipropylpropionamide, N,N-dibutylpropionamide, N,N-dimethylethylpropionamide, and 3-butoxy-N-methylpropionamide.

20. A positive electrode slurry, wherein the positive electrode slurry is prepared by the preparation method for the positive electrode slurry according to any one of claims 1 to 19.

21. The positive electrode slurry according to claim 20, wherein a solid content of the positive electrode slurry is in a range from 65% to 70%, initial viscosity of the positive electrode slurry is in a range from 6,000 mPa·s to 31,000 mPa·s, and after standing for 24 hours, the viscosity of the positive electrode slurry does not exceed 49,000 mPa·s.

22. A secondary battery, comprising a positive electrode plate, a separator, a negative electrode plate and an electrolyte solution, wherein the positive electrode plate is prepared from at least one of the positive electrode slurry prepared by the preparation method for the positive electrode slurry according to any one of claims 1 to 19 or the positive electrode slurry according to claim 20 to 21.

23. The secondary battery according to claim 22, wherein the secondary battery is any one of a lithium-ion battery, a sodium-ion battery, a magnesium-ion battery, and a potassium-ion battery.

24. A battery module, comprising the secondary battery according to claim 22 or 23.

25. A battery pack, comprising at least one of the secondary battery according to claim 22 or 23, or the battery module according to claim 24.

26. An electrical apparatus, comprising at least one selected from the secondary battery according to claim 22 or 23, the battery module according to claim 24 or the battery pack according to claim 25.
